# EUROPEAN PATENT APPLICATION

(11) **EP 4 742 119 A1**
(43) Date of publication of application: **13.05.2026**
(21) Application number: 24212099.6
(22) Date of filing: 11.11.2024
(51) Int. Cl.: G06Q 10/04, G06N 3/126, G06Q 10/0631, G06Q 50/04

(54) **OPTIMIZED PRODUCT MATERIAL SELECTION FOR CIRCULAR EFFICIENCY**

(71) Applicant: Siemens Aktiengesellschaft, 80333 München (DE)
(72) Inventor: PILLAI, Unnikrishna, Bangalore 560016 (IN); PRADEEP CHANDRAN, Rohith Krishnan, Thrissur, Kerala 680005 (IN)
(74) Representative: HKW Intellectual Property PartG mbB

(57) **Abstract**

A materials selection optimization system (MSOS) (102), a computer implemented method (300) and a computer program product for selecting materials associated with a product deployable in an industrial environment, are provided. The MSOS generates obtains product data and a plurality of optimization objectives associated with the product, identifies from a materials database, material alternatives to the materials used in the product based on one or more material parameters, iteratively determines, using a multi-objective genetic algorithm, from the material alternatives optimal material combinations until each of the optimization objectives are met, and renders the optimal material combinations associated with the product, wherein each combination is associated with a design scenario associated with the product.

## Description

The present disclosure relates to a system and a method for automated selection of materials. More particularly, the present disclosure relates to optimization of material selection process during design of a product using multi-objective genetic algorithm for increasing sustainability of the product.

Ecodesign of a product considers environmental aspects at each stage of the product development process, thereby resulting in products which have lowest possible environmental impact throughout the product life cycle. Conventionally material selection phase in ecodesign of a product is based on a combination of expert knowledge, simplified lifecycle assessments, and basic decision-making tools including checklists, matrices, or basic software tools that score materials based on various criteria, including their environmental impact. However, these traditional methods have limitations as they often require substantial manual input and expert analysis, which can be time-consuming and prone to biases or oversights. Moreover, the rapid evolution of materials science, coupled with increasing regulatory pressures and market demands for sustainability, has made the material selection process even more complex especially amidst evolving sustainability regulations, standards and circularity performances.

Traditionally, product designers are known to select materials for a product based on multitude of factors, majority of which are associated with technical performance of the material and overall cost effectiveness. However, the evolving sustainable product regulations such as the Ecodesign directive rolled out by European Commission and other such initiatives across the globe towards adoption of circular economy principles demand industries to factor in environmental aspects into various stages of their product design and manufacturing. This complicates the decision making of product designers as they need to consider aspects like lifecycle assessment impacts, resource depletion, recyclability, etc. Moreover, the product designers face difficulties adhering to the aforementioned directives due to trade-offs between material properties, cost and environmental impacts.

In such complex design and manufacturing scenario, manual selection approach of product designers based on their experience and expertise becomes increasingly time-consuming and leads to suboptimal choices being made. Furthermore, there is a dearth of optimization models that can provide best possible circularity performance and practices.

Accordingly, it is an object of the present disclosure to address the technical challenge in developing an automated way of material selection which considers circularity performance and environmental aspects along with other factors to meet the directives. Moreover, there is a need for tools that can handle a multitude of variables in an integrated, data-driven and automated approach to provide a robust, multi-dimensional analysis that aligns with principles of the circular economy whilst performing material selection.

The present disclosure achieves the aforementioned object by providing a materials selection optimization system and a computer implemented method for selecting materials associated with a product deployable in an industrial environment by employing a multi-objective genetic algorithm that ensures scalable and optimized selection of materials whilst minimizing the time and resources required in the material selection process. As used herein, the term industrial environment refers to any environment that has industrial automation products deployable therein. For example, factories, buildings, etc., having industrial automation products such as circuit breakers, programmable logic controllers, etc., deployed therein.

According to one aspect of the present disclosure, the materials selection optimization system for selecting materials associated with a product deployable in an industrial environment disclosed herein comprises a non-transitory computer readable storage medium storing computer program instructions defined by module(s) of the materials selection optimization system, and at least one processor communicatively coupled to the non-transitory computer readable storage medium, wherein the at least one processor is configured to execute the computer program instructions, thereby performing the computer implemented method for selecting materials required in product design and/or manufacturing in an industrial environment. As used herein, "non-transitory computer readable storage medium" refers to all computer readable media, for example, non-volatile media, volatile media, and transmission media except for a transitory, propagating signal.

According to an embodiment, the materials selection optimization system is installable on accessible by a user of the materials selection optimization system via his/her user device, for example, a personal computing device, a workstation, a client device, a network enabled computing device, any other suitable computing equipment, and combinations of multiple pieces of computing equipment being used by a user.

According to another embodiment, the materials selection optimization system is configurable as a web-based platform, for example, a website hosted on a server or a network of servers or is implemented in the cloud computing environment as a cloud computing-based platform implemented as a service.

According to this embodiment, a user of the materials selection optimization system accesses the materials selection optimization system via a communication network comprising, for example, a wired network, a wireless network, or a network formed from any combination thereof. Advantageosly, the materials selection optimization system has one or more users for example, product designers who are tasked with selection of materials while designing a product.

According to an embodiment, the materials selection optimization system comprises a graphical user interface (GUI). According to this embodiment, the user can access the materials selection optimization system via the GUI. The GUI is, for example, an online web interface, a web based downloadable application interface, etc.

According to an embodiment, the materials selection optimization system comprises a materials database representing one or more databases of the materials selection optimization system.

According to an embodiment, the materials selection optimization system comprises one or more modules, for example, an impact identification module, an alternative materials identification module, and a robust eco design optimization module in operable communication with one another. According to this embodiment, the materials selection optimization system receives from the user, for example, via his/her user device, product information such as materials required in designing a product deployable in an industrial environment and optimization criteria associated with the product being designed. The impact identification module based on the user input, retrieves a baseline information from a circularity system, for example, via the communication network. The baseline information comprises, for example, baseline performance of various materials required in the product design in the industrial environment. The impact identification module identifies the baseline performance of various materials and combinations thereof based on the baseline information. The impact identification module further determines materials having a high impact on the baseline performance from a circularity standpoint. The alternative materials identification module determines material alternatives to these high impact materials, for example, based on suppliers of the materials, processes associated with material manufacturing, lifetime of the materials, end of life of the materials, etc. The alternative materials identification module is in communication with the materials database of the materials selection optimization system. The robust eco design optimization module iteratively finds the optimal materials and/or material combinations based on the optimization criteria such as product cost, environmental impact, circularity performance, suppliers, etc. The materials selection optimization system then renders this optimal materials and/or material combinations to the user via his/her user device or via the GUI of the materials selection optimization system.

According to another embodiment, the materials selection optimization system comprises a single module storing therein computer program instructions defining the aforementioned steps conducted by the impact identification module, the alternative materials identification module, and the robust eco design optimization module.

According to another aspect, disclosed herein is the computer implemented method for selecting materials associated with a product deployable in an industrial environment. The computer implemented method disclosed herein employs the materials selection optimization system (MSOS) for selecting materials associated with a product deployable in an industrial environment.

The computer implemented method disclosed herein employs the MSOS for selecting materials associated with a product deployable in an industrial environment. The computer implemented method obtains, by a processor of the MSOS, product data and a plurality of optimization objectives associated with the product.

According to an embodiment, the computer implemented method obtains the product data and the optimization objectives from a user, for example, a product designer or a product lifecycle manager, via his/her user device which is in communication with the MSOS.

According to another embodiment, the computer implemented method obtains the product data and the optimization objectives from one or more systems and/or databases having product data and/or optimization objectives stored therein.

The product data comprises, for example, a type of the product, a rating of the product, one or more physical properties associated with the product such as a weight of the product and/or physical dimensions associated therewith, components of the product, and materials typically used for manufacturing the product and its components.

The optimization objectives comprise at least a technical objective, an economical objective, and an environmental objective associated with the product. The technical objectives comprise, for example, mechanical strength, thermal profile, electrical properties and/or chemical properties of the product and/or the product components. The economic objectives comprise, for example, overall costs associated with the product design, sourcing and/or manufacturing, etc. The environmental objectives comprise, for example, carbon emissions of the product and/or the product components, recyclability of the product and/or the product components, useful life of the product, etc. The optimization objectives are a function of environmental regulations, compatibility of the materials used in designing and manufacturing of various components of the product, and durability of the overall product thus designed and manufactured.

The computer implemented method identifies, by the processor of the MSOS, from a materials database, material alternatives to the materials used in the product based on one or more material parameters. The material parameters comprise, for example, material suppliers, material lifespan, material efficiency, material process, material end of life, and/or material circularity.

According to an embodiment, the computer implemented method determines, by the processor of the MSOS, an environmental impact caused by one or more materials used in the product based on the product data and a baseline circularity performance of the product. The environmental impact is an indicator of circularity computed from the baseline circularity performance, for example, via a circularity index that is a function of individual circularity indices namely material, energy and water and their respective weighted factors derived using optimization techniques, etc. The overall circularity index thus calculated is stored in an external circularity system and is reusable across industries. The formulation considers various circularity indices to capture different dimensions of circular practices in an entity such as a factory , a utility, a city, a building, etc., and utilizes a weighted average approach allowing decision-makers to prioritize specific circular aspects based on sustainability goals and priorities. The computer implemented method may rank the materials based on their environmental impact such that the ones having a high environmental impact, that is, low overall circularity index, would be considered on priority for selection optimization.

Advantageously, according to this embodiment, the computer implemented method identifies material alternatives based on the environmental impact, that is, to the materials having a high environmental impact first before finding material alternatives to those materials having a low or medium environmental impact.

The computer implemented method iteratively determines from the material alternatives, by the processor of the MSOS, a plurality of optimal material combinations until each of the optimization objectives are met. The computer implemented method iteratively determines the plurality of optimal material combinations by employing a multi-objective genetic algorithm.

The computer implemented method in determining the optimal material combinations from the material alternatives, defines a search space based on the optimization objectives, for example, defines the multi-objective genetic problem based on two or more conflicting optimization objectives such as the technical, the economical and the environmental objectives. The computer implemented method generates a set of possible material combinations in the defined search space, also known as initializing population of a particular size such that this size ensures coverage across various material alternatives. The computer implemented method evaluates each of the material combinations based on the optimization objectives, for example, by calculating optimization objectives per material combination and by checking compatibility of the calculated objectives with various properties of the materials including mechanical, thermal, electrical and chemical. The computer implemented method sorts the material combinations based on the optimization objectives, for example, by ranking solutions comprising material combinations into pareto fronts by creating a first front of non-dominated solutions with optimal tradeoffs with respect to the optimization objectives and then creating a second front having solutions dominated by at least one in the first front, thereby resulting in ranked solutions having material combinations such that the top ranked material combination indicates an optimal tradeoff with respect to optimization objectives. The optimal tradeoff, advantageously, ensures that the solutions finally selected or ranked offer the maximum possible optimal trade-offs, allowing the users of the MSOS such as product designers to choose from these solutions based on their specific preferences and constraints whilst conforming to circularity. The computer implemented method identifies a reference point for the sorted material combinations based on the optimization objectives. Reference points are based on target values for each objective and help in spreading solutions across the search space. The computer implemented method further calculates distances between the reference point and a point representing each solution in the search space, that is, for example via the Euclidean distance therebetween. The computer implemented method also associates each solution, that is, the material combination with the nearest reference point to ensure solutions are clustered around different reference points. The computer implemented method modifies the sorted material combinations by employing the multi-objective genetic algorithm.

The multi-objective genetic algorithm determines from the sorted material combinations, based on the reference point, two or more parent combinations, for example, the parent combinations, that is, parent solutions of material combinations, using pareto rank and diversity metrics such as crowding distance and proximity to reference points. The multi-objective genetic algorithm generates an offspring combination by combining the two or more parent combinations. The multi-objective genetic algorithm mutates the offspring combination based on the product data by introducing small changes to solutions, for example, by replacing a material with an alternative material having lower environmental impact that the material.

The computer implemented method iteratively selects an optimal material combination from the sorted material combinations, for example, by selecting the best solutions based on pareto dominance and coverage across the reference points. The computer implemented method determines whether a predefined convergence criteria is met. If not, the computer implemented method performs iterations of generating a set of possible material combinations, evaluating the material combinations based on the optimization objectives, sorting the material combinations, identifying the reference point, modifying the sorted material combinations, and selecting the optimal material combination, until the predefined convergence criterion is met. According to an embodiment, the computer implemented method determines the predefined convergence criteria based on heuristics or historical data pertaining to bill of materials, etc. For example, the computer implemented method stops the iterations when there are no better solutions found, but sometimes this may take too long so a convergence criterion/criteria is configured by defining termination and tolerance criteria comprising, for example, a tolerance for change in design variables, a tolerance for change in constraint violation, a tolerance for change in objective function values, a number of generations to check for improvement, a maximum number of generations, a maximum number of evaluations, etc.

The computer implemented method stores the optimal material combinations associated with the product in the materials database of the MSOS.

The computer implemented method renders, by the processor of the MSOS on a graphical user interface (GUI) of the MSOS, the optimal material combinations associated with the product, wherein each combination is associated with a design scenario associated with the product. The term design scenario is not to be limited to merely the product design phase but can extend to product manufacturing, sourcing, and supply stages. However, the advantage of optimizing material selection at the design phase includes an early integration of the circularity design process in the product's design and development.

According to yet another aspect of the present disclosure, disclosed herein is a computer program product having machine-readable instructions stored therein, which when executed by one or more processors, cause the processors to perform the computer implemented method for selecting materials associated with a product deployable in an industrial environment.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
FIG 1 illustrates a system having a materials selection optimization system for selecting materials associated with a product deployable in an industrial environment, according to an embodiment of the present disclosure.
FIG 2 is a block diagram illustrating an architecture of a computer system employed by the materials selection optimization system shown in FIG 1, for selecting materials associated with a product deployable in an industrial environment, according to an embodiment of the present disclosure.
FIGS 3A-3B illustrate process flowcharts of a computer implemented method for selecting materials associated with a product deployable in an industrial environment, according to an embodiment of the present disclosure.

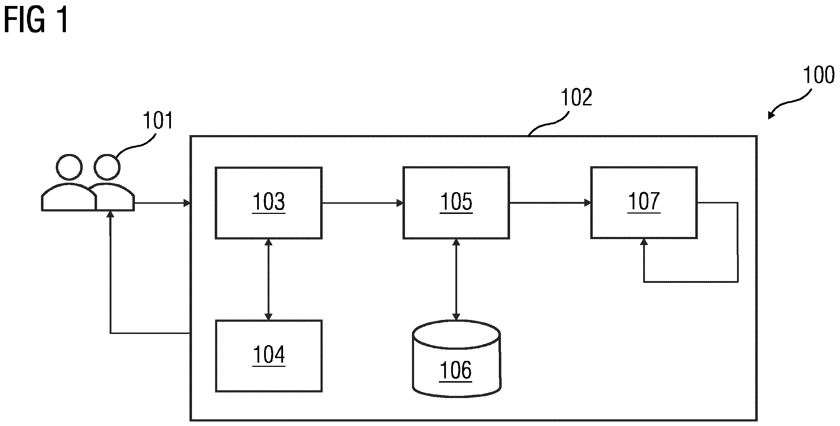

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details. FIG 1 illustrates a system 100 having a materials selection optimization system 102 for selecting materials associated with a product deployable in an industrial environment, according to an embodiment of the present disclosure. The system 100 comprises the materials selection optimization system 102 that is installable on accessible by a user 101 of the materials selection optimization system 102 via a user device, for example, a personal computing device, a workstation, a client device, a network enabled computing device, any other suitable computing equipment, and combinations of multiple pieces of computing equipment being used by a user 101.

The materials selection optimization system 102 may also communicate with the user device via a communication network (not shown), for example, a wired network, a wireless network, or a network formed from any combination thereof.

The materials selection optimization system 102 is configurable as a web-based platform, for example, a website hosted on a server or a network of servers or is implemented in the cloud computing environment as a cloud computing-based platform implemented as a service. A user 101 of the materials selection optimization system 102 in this case accesses the materials selection optimization system 102 via the communication network. The materials selection optimization system 102 may have one or more users for example, product designers who are tasked with selection of materials while designing a product.

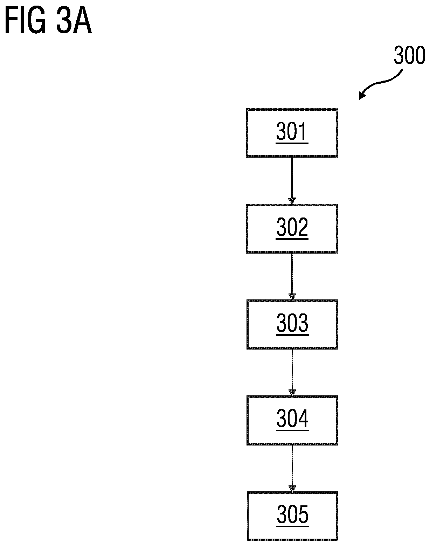

The materials selection optimization system 102 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by the materials selection optimization system 102. The processor is configured to execute the defined computer program instructions for selecting materials associated with a product deployable in an industrial environment, as described in the detailed description of FIGS 3A-3B.

The materials selection optimization system 102 comprises a graphical user interface (GUI) (not shown), and a materials database 106 representing one or more databases of the materials selection optimization system 102. A user 101 using the user device can access the materials selection optimization system 102 via the GUI. The GUI is, for example, an online web interface, a web based downloadable application interface, etc.

According to one example, the materials selection optimization system 102 comprises an impact identification module 103, an alternative materials identification module 105, and a robust eco design optimization module 107 in operable communication with one another. According to this example, the materials selection optimization system 102 receives from the user 101 via his/her user device, product information such as materials required in designing a product and optimization criteria associated with the product being designed. The impact identification module 103 based on this user input, retrieves a baseline information from a circularity system 104. The baseline information comprises, for example, baseline performance of various materials required in the product design in the industrial environment. The impact identification module 103 identifies the baseline performance of various materials and combinations thereof based on the baseline information. The impact identification module 103 further determines materials having a high impact on the baseline performance from a circularity standpoint. The alternative materials identification module 105 determines material alternatives to these high impact materials, for example, based on suppliers of the materials, processes associated with material manufacturing, lifetime of the materials, end of life of the materials, etc. The alternative materials identification module 105 is in communication with the materials database 106 of the materials selection optimization system 102. The robust eco design optimization module 107 iteratively finds the optimal materials and/or material combinations based on the optimization criteria such as product cost, environmental impact, circularity performance, suppliers, etc. The materials selection optimization system 102 then renders this optimal materials and/or material combinations to the user 101 via his/her user device or via the GUI of the materials selection optimization system 102.

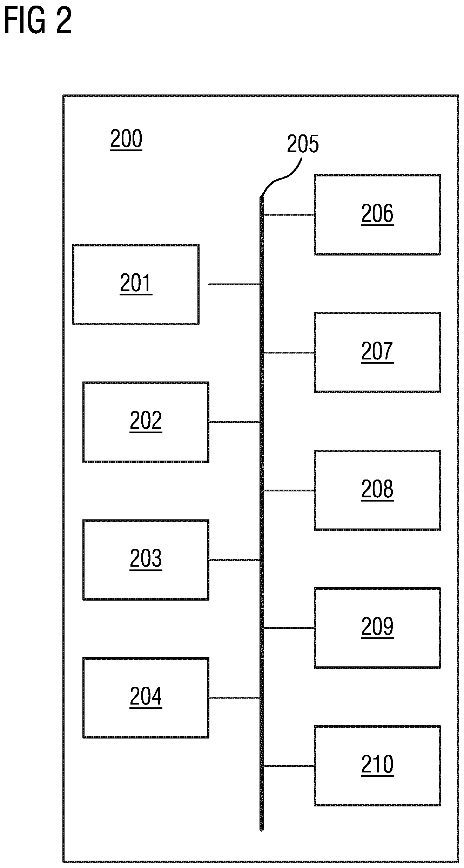

FIG 2 is a block diagram illustrating an architecture of a computer system 200 employed by the materials selection optimization system (MSOS) 102 shown in FIG 1, for selecting materials associated with a product deployable in an industrial environment, according to an embodiment of the present disclosure.

The MSOS 102 employs the architecture of the computer system 200. The computer system 200 is programmable using a high-level computer programming language. The computer system 200 may be implemented using programmed and purposeful hardware. The computer system 200 comprises a processor 201, a non-transitory computer readable storage medium such as a memory unit 202 for storing programs and data, an input/output (I/O) controller 203, a network interface 204, a data bus 205, a display unit 206, input devices 207, a fixed media drive 208 such as a hard drive, a removable media drive 209 for receiving removable media, output devices 210, etc.

The processor 201 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 201 may also be implemented as a processor set comprising, for example, a general-purpose microprocessor and a math or graphics co-processor. The MSOS 102 disclosed herein is not limited to a computer system 200 employing a processor 201. The computer system 200 may also employ a controller or a microcontroller. The processor 201 executes the instructions defined by the MSOS 102.

The memory unit 202 is used for storing programs and applications of the MSOS 102. The memory unit 202 is, for example, a random-access memory (RAM) or another type of dynamic storage device that stores information and instructions for execution by the processor 201. The memory unit 202 also stores temporary variables and other intermediate information used during execution of the instructions by the processor 201. The computer system 200 further comprises a read only memory (ROM) or another type of static storage device that stores static information and instructions for the processor 201. The I/O controller 203 controls input actions and output actions performed by the MSOS 102.

The network interface 204 enables connection of the computer system 200 to the communication network. For example, the MSOS 102 connects to the communication network via the network interface 204. In an embodiment, the network interface 204 is provided as an interface card also referred to as a line card. The network interface 204 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 205 permits communications between, for example, the MSOS 102, the materials database 106, the GUI, etc.

The display unit 206, via the graphical user interface (GUI), displays information such as the product information, the optimization criteria, etc. The display unit 206, via the GUI, also displays information such as user interface elements including text fields, buttons, windows, etc., for allowing a user to provide his/her inputs, if any. The display unit 206 comprises, for example, a liquid crystal display, a plasma display, an organic light emitting diode (OLED) based display, etc. The input devices 207 are used for inputting data into the computer system 200. The input devices 207 are, for example, a keyboard such as an alphanumeric keyboard, a touch sensitive display device, and/or any device capable of sensing a tactile input.

Computer applications and programs are used for operating the computer system 200. The programs are loaded onto the fixed media drive 208 and into the memory unit 202 of the computer system 200 via the removable media drive 209. In an embodiment, the computer applications and programs may be loaded directly via the communication network. Computer applications and programs are executed by double clicking a related icon displayed on the display unit 206 using one of the input devices 207. The output devices 210 output the results of operations performed by the MSOS 102. For example, the MSOS 102 provides graphical representation of the various material combinations along with the objectives defined for their optimization for the product being designed using the output devices 210.

The processor 201 executes an operating system. The computer system 200 employs the operating system for performing multiple tasks. The operating system is responsible for management and coordination of activities and sharing of resources of the computer system 200. The operating system further manages security of the computer system 200, peripheral devices connected to the computer system 200, and network connections. The operating system employed on the computer system 200 recognizes, for example, inputs provided by the users using one of the input devices 207, the output display, files, and directories stored locally on the fixed media drive 208. The operating system on the computer system 200 executes different programs using the processor 201. The processor 201 and the operating system together define a computer platform for which application programs in high level programming languages are written.

The processor 201 of the computer system 200 employed by the MSOS 102 retrieves instructions defined by the MSOS 102 for performing respective functions disclosed in the detailed description of FIGS 3A-3B. A program counter determines the location of the instructions in the memory unit 202. The instructions fetched by the processor 201 from the memory unit 202 after being processed are decoded. The instructions are stored in an instruction register in the processor 201. After processing and decoding, the processor 201 executes the instructions, thereby performing one or more processes defined by those instructions.

At the time of execution, the instructions stored in the instruction register are examined to determine the operations to be performed. The processor 201 then performs the specified operations. The operations comprise arithmetic operations and logic operations. The operating system performs multiple routines for performing several tasks required to assign the input devices 207, the output devices 210, and memory for execution of the instructions defined by the MSOS 102. The tasks performed by the operating system comprise, for example, assigning memory as required by the MSOS 102, moving data between the memory unit 202 and disk units, and handling input/output operations. The operating system performs the tasks on request by the operations and after performing the tasks, the operating system transfers the execution control back to the processor 201. The processor 201 continues the execution to obtain one or more outputs. The outputs of the MSOS 102 are displayed to the user on the GUI.

For purposes of illustration, the detailed description refers to the MSOS 102 being run locally on the computer system 200, however the scope of the present invention is not limited to the MSOS 102 being run locally on the computer system 200 via the operating system and the processor 201, but may be extended to run remotely over the communication network (not shown) by employing a web browser and a remote server, a mobile phone, or other electronic devices. One or more portions of the computer system 200 may be distributed across one or more computer systems (not shown) coupled to the communication network.

Disclosed herein is also a computer program product comprising a non-transitory computer readable storage medium that stores computer program codes comprising instructions executable by at least one processor 201 for selecting materials associated with a product deployable in an industrial environment, as disclosed in detailed description of FIGS 3A-3B.

A person having ordinary skills in the art would appreciate that the computer program product would comprise several computer program codes for executing instructions defined by the MSOS 102 for selecting materials associated with a product deployable in an industrial environment, as disclosed in detailed description of FIGS 3A-3B.

FIGS 3A-3B illustrate process flowcharts of a computer implemented method 300 for selecting materials associated with a product deployable in an industrial environment, according to an embodiment of the present disclosure.

The computer implemented method 300 disclosed herein employs the materials selection optimization system, hereinafter referred to as MSOS 102, shown in FIG 1 for selecting materials associated with a product deployable in an industrial environment.

At step 301, the computer implemented method 300 obtains, by a processor of the MSOS 102, product data and a plurality of optimization objectives associated with the product.

The product data comprises, for example, a type of the product, a rating of the product, one or more physical properties associated with the product such as a weight of the product and/or physical dimensions associated therewith, components of the product, and materials typically used for manufacturing the product and its components.

The optimization objectives comprise at least a technical objective, an economical objective, and an environmental objective associated with the product. The technical objectives comprise, for example, mechanical strength, thermal profile, electrical properties and/or chemical properties of the product and/or the product components. The economic objectives comprise, for example, overall costs associated with the product design, sourcing and/or manufacturing, etc. The environmental objectives comprise, for example, carbon emissions of the product and/or the product components, recyclability of the product and/or the product components, useful life of the product, etc. The optimization objectives are a function of environmental regulations, compatibility of the materials used in designing and manufacturing of various components of the product, and durability of the overall product thus designed and manufactured.

The computer implemented method obtains the product data and the optimization objectives from a user 101 via his/her user device which is in communication with the MSOS 102.

At step 302, the computer implemented method determines, by the processor 201 of the MSOS 102, an environmental impact caused by one or more materials used in the product based on the product data and a baseline circularity performance of the product. The environmental impact is an indicator of circularity computed from the baseline circularity performance, for example, via a circularity index that is a function of individual circularity indices namely material, energy and water and their respective weighted factors derived using optimization techniques, etc. The overall circularity index thus calculated is stored in an external circularity system 104 and is reusable across industries. The formulation considers various circularity indices to capture different dimensions of circular practices in an entity such as a factory , a utility, a city, a building, etc., and utilizes a weighted average approach allowing decision-makers to prioritize specific circular aspects based on sustainability goals and priorities. The computer implemented method may rank the materials based on their environmental impact such that the ones having a high environmental impact, that is, low overall circularity index, would be considered on priority for selection optimization.

At step 303, the computer implemented method identifies, by the processor 201 of the MSOS 102, from a materials database 106, material alternatives to the materials used in the product based on one or more material parameters. The computer implemented method may identify material alternatives to the materials having a high environmental impact first before finding material alternatives to those materials having a low or medium environmental impact. The material parameters comprise material suppliers, material lifespan, material efficiency, material process, material end of life, and/or material circularity.

At step 304, the computer implemented method iteratively determines from the material alternatives, by the processor 201 of the MSOS 102, a plurality of optimal material combinations until each of the optimization objectives are met. The computer implemented method iteratively determines the plurality of optimal material combinations by employing a multi-objective genetic algorithm.

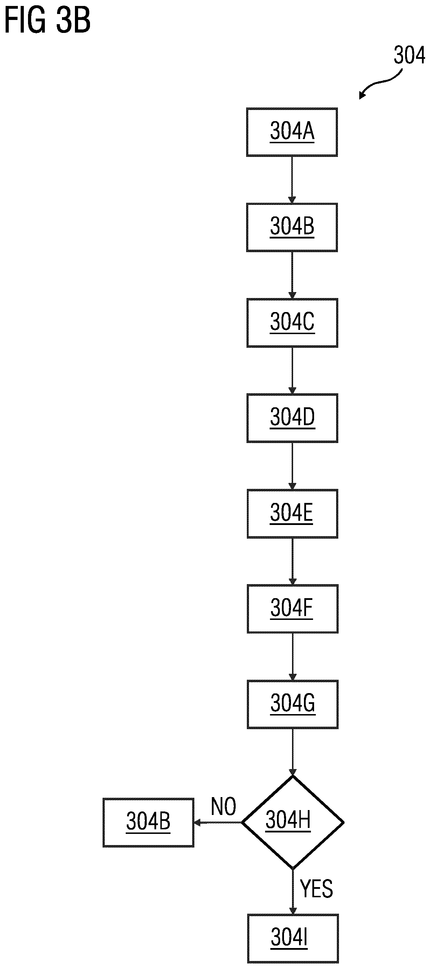

FIG 3B illustrates the steps involved in determining the optimal material combinations from the material alternatives. At step 304A, the computer implemented method defines a search space based on the optimization objectives, for example, defines the multi-objective genetic problem based on two or more conflicting optimization objectives such as the technical, the economical and the environmental objectives.

Consider an example, where material selection for a residual-current circuit breaker (RCCB) is being optimized by the computer implemented method employing the MSOS. Typically, millions of RCCBs are installed in electrical equipment and are found in nearly every building to protect residents in a building from serious electrical accidents. A small sized RCCB weighs about 200 grams and is made from a variety of plastics and different iron and copper alloys along with some precious metals. The RCCB is expected to last for 20 years assuming continuous operation with a power loss of approximately 0.4 watts. When it's disposed of, some of its components may be recycled, or perhaps the entire device ends up in a landfill. In this example, the computer implemented method improves the circularity of the RCCB by selecting materials associated with the RCCB deployable in industrial environments, which in this example's case, would also extend to residential environments.

According to this example, at step 304A, the computer implemented method, defines a search space based on optimization objectives such as
1. Minimize CO2 emissions during material extraction, production, and end-of-life
2. Minimize material and manufacturing costs.
3. Maximize the product's lifespan (target: 20+ years for reliability).
4. Ensure recyclability > 90%
5. Ensure operational power loss ≤ 0.4 watts which is critical for energy-efficient components such as circuit breakers or energy meters.

Moreover, the computer implemented method uses the product data for the RCCB, to obtain materials used such as plastics, copper, and iron alloys and current performance characteristics such as weight, power consumption, expected lifespan, etc., to define the search space.

At step 304B, the computer implemented method generates a set of possible material combinations in the defined search space, also known as initializing population of a particular size such that this size ensures coverage across various material alternatives.

According to aforementioned example, at step 304B, the computer implemented method, generates an initial population having multiple material combinations including
Combination 1: Polyamide-based plastic with standard copper alloy contacts.
Combination 2: Recycled ABS plastic with high-conductivity copper.
Combination 3: Biopolymer casing with tin-coated copper conductors.

The population size in this example is initiated with about 200 combinations to ensure coverage across various material alternatives.

At step 304C, the computer implemented method evaluates each of the material combinations based on the optimization objectives, that is, by calculating optimization objective per material combination and by checking compatibility with various properties of the materials including mechanical, thermal, electrical and chemical.

According to aforementioned example, at step 304C, the computer implemented method, calculates the objectives for each combination including for a particular material combination:
- CO2 emissions: 65 kg during production
- Material cost: €120 per unit
- Product lifespan: 22 years
- Recyclability: 92%
- Power loss: 0.38 watts

Followed by which, the computer implemented method checks compatibility of each material combination using properties such as:
- Mechanical properties : Strength , durability
- Thermal properties : Conductivity, thermal resistance.
- Electrical properties : Conductivity and resistance
- Chemical properties : Corrosion resistance , recyclability

At step 304D, the computer implemented method sorts the material combinations based on the optimization objectives, that is, ranks solutions comprising material combinations into pareto fronts by creating a first front of a non-dominated solutions with optimal tradeoffs with respect to the optimization objectives and then creating a second front having solutions dominated by at least one in the first front, thereby resulting in ranked material combinations such that the top ranked material combination indicates an optimal tradeoff with respect to optimization objectives.

At step 304E, the computer implemented method identifies a reference point for the sorted material combinations based on the optimization objectives. Reference points are based on target values for each objective, and help spread solutions across the search space. The computer implemented method further calculates distances between the reference point and a point representing each solution, that is, a material combination via the Euclidean distance therebetween. The computer implemented method also associates each solution, that is, the material combination with the nearest reference point to ensure solutions are clustered around different reference points.

At step 304F, the computer implemented method modifies the sorted material combinations by employing the multi-objective genetic algorithm. The multi-objective genetic algorithm determines from the sorted material combinations, based on the reference point, two or more parent combinations, for example, the parent combinations, that is, parent solutions of material combinations are determined using pareto rank and diversity metrics such as crowding distance and proximity to reference points.

The multi-objective genetic algorithm generates an offspring combination by combining the two or more parent combinations, for example, biopolymer casing from one parent and tin-coated copper conductors from another

The multi-objective genetic algorithm mutates the offspring combination based on the product data by introducing small changes to solutions, for example, by replacing standard iron alloy with lightweight composite material.

At step 304G, the computer implemented method iteratively selects an optimal material combination from the sorted material combinations, for example, by selecting the best solutions based on pareto dominance and coverage across the reference points.

At step 304H, the computer implemented method determines whether a convergence criteria is met. If not, the computer implemented method performs iterations from steps 304B-304G including generating a set of possible material combinations, evaluating the material combinations based on the optimization objectives, sorting the material combinations, identifying the reference point, modifying the sorted material combinations, and selecting the optimal material combination, until a predefined convergence criterion is met. The computer implemented method determines the convergence criteria based on heuristics or historical data pertaining to bill of materials, etc. For example, the computer implemented method stops the iterations when there are no better solutions found, but sometimes this may take too long so a convergence criterion/criteria is configured by defining termination and tolerance criteria such as a tolerance for change in design variables of 1e-8, a tolerance for change in constraint violation of 1e-6, a tolerance for change in objective function values of 0.0025, number of generations to check for improvement of 10, a maximum number of generations of 1000, a maximum number of evaluations of 20000, etc.

At step 304I, the computer implemented method stores the optimal material combinations associated with the product in the materials database 106.

At step 305, the computer implemented method renders, by the processor 201 of the MSOS 102 on a graphical user interface (GUI) of the MSOS 102, the optimal material combinations associated with the product, wherein each combination is associated with a design scenario associated with the product. The term design scenario is not to be limited to merely the product design phase but can extend to product manufacturing, sourcing, and supply stages. However, the advantage of optimizing material selection at the design phase includes an early integration of the circularity design process in the product's design and development. According to aforementioned example, at step 305, the computer implemented method produces a set of pareto-optimal solutions that offer trade-offs between various optimization objectives including, for example, carbon dioxide emissions, costs, and lifespan for the RCCB. Each solution is adaptable to different design scenarios within the RCCB lifecycle as exemplified in the table provided below:

| **Phase** | **Design Scenario** | **Output generated by MSOS** |
|---|---|---|
| Production Design Phase | Prioritize durability and recyclability while keeping production costs within a target range | The computer implemented method suggests for example biopolymer casings and recycled copper contacts as material combinations to ensure high recyclability and CO₂ savings |
| Product Manufacturing Phase | A supplier for standard copper alloy becomes unavailable. | The computer implemented method recommends an alternative high-conductivity copper source(s) as material combinations to maintain compliance with operational constraints while avoiding production delays |
| Product Sourcing and Supply chain phase | Minimize CO2 emissions during transport by sourcing materials locally | The computer implemented method prioritize local suppliers for biopolymer and copper components, balancing cost and ecological impact as material combinations |

Where databases are described such as the materials database 106, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present disclosure can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present disclosure is not limited to a particular computer system platform, processor, operating system, or network. One or more aspects of the present disclosure may be distributed among one or more computer systems, for example, servers configured to provide one or more services to one or more client computers, or to perform a complete task in a distributed system. For example, one or more aspects of the present disclosure may be performed on a client-server system that comprises components distributed among one or more server systems that perform multiple functions according to various embodiments. These components comprise, for example, executable, intermediate, or interpreted code, which communicate over a network using a communication protocol. The present disclosure is not limited to be executable on any particular system or group of systems, and is not limited to any particular distributed architecture, network, or communication protocol.

While the present disclosure has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present disclosure is, therefore, indicated by the following claims rather than by the foregoing description. All changes, modifications, and variations coming within the meaning and range of equivalency of the claims are to be considered within their scope.

### Reference Numerals

- 100: system
- 101: user
- 102: materials selection optimization system (MSOS)
- 103: impact identification module
- 104: circularity system
- 105: alternative materials identification module
- 106: materials database
- 107: robust eco design optimization module
- 200: computer system
- 201: processor
- 202: memory unit
- 203: input/output (I/O) controller
- 204: network interface
- 205: data bus
- 206: display unit
- 207: input devices
- 208: fixed media drive
- 209: removable media drive
- 210: output devices

## Claims

1. A computer implemented method (300) for selecting materials associated with a product deployable in an industrial environment, the computer implemented method **characterized by**:
- obtaining (301), by a processor (201) of a materials selection optimization system (102), product data and a plurality of optimization objectives associated with the product;
- identifying (303), by the processor (201) of the materials selection optimization system (102), from a materials database, material alternatives to the materials used in the product based on one or more material parameters;
- iteratively determining (304) from the material alternatives, by the processor (201) of the materials selection optimization system (102), a plurality of optimal material combinations until each of the optimization objectives are met; and
- rendering (305), by the processor (201) of the materials selection optimization system (102) on a graphical user interface of the materials selection optimization system (102), the optimal material combinations associated with the product, wherein each combination is associated with a design scenario associated with the product.

2. The computer implemented method (300) according to the claim 1, wherein the optimization objectives comprise at least a technical objective, an economical objective, and an environmental objective associated with the product.

3. The computer implemented method (300) according to the claim 1, wherein the material parameters comprise one or more of material suppliers, material lifespan, material efficiency, material process, material end of life, and material circularity.

4. The computer implemented method (300) according to the claim 1, wherein iteratively determining the plurality of optimal material combinations comprises employing a multi-objective genetic algorithm.

5. The computer implemented method (300) according to any one of the claims 1 and 4, wherein iteratively determining the plurality of optimal material combinations comprises performing:
- defining (304A) a search space based on the optimization objectives;
- generating (304B) a set of possible material combinations in the defined search space;
- evaluating (304C) each of the material combinations based on the optimization objectives;
- sorting (304D) the material combinations based on the optimization objectives;
- identifying (304E) a reference point for the sorted material combinations based on the optimization objectives;
- modifying (304F) the sorted material combinations by employing the multi-objective genetic algorithm; and
- iteratively selecting (304G) an optimal material combination from the sorted material combinations.

6. The computer implemented method (300) according to claim 5, wherein the steps of generating a set of possible material combinations; evaluating the optimization objectives for each of the material combinations, sorting the material combinations, identifying the reference point; modifying the sorted material combinations; and selecting the optimal material combination are performed iteratively until a predefined convergence criterion is met.

7. The computer implemented method (300) according to any one of the claims 5 and 6, wherein modifying (304F) the sorted material combinations by employing the multi-objective genetic algorithm comprises performing:
- determining from the sorted material combinations, based on the reference point, two or more parent combinations;
- generating an offspring combination by combining the two or more parent combinations; and
- mutating the offspring combination based on the product data.

8. The computer implemented method (300) according to the claim 1, wherein the optimal material combinations associated with the product are stored in the materials database.

9. A materials selection optimization system (102) for selecting materials associated with a product deployable in an industrial environment, **characterized by**:
- a non-transitory computer readable storage medium storing computer program instructions defined by the materials selection optimization system (102);
- at least one processor (201) communicatively coupled to the non-transitory computer readable storage medium, wherein the at least one processor (201) is configured to execute the computer program instructions, thereby performing the method according to the claims 1 to 8.

10. A computer-program product having machine-readable instructions stored
therein, which when executed by one or more processors (201), cause the processors (201) to perform the method according to the claims 1 to 8.
